# NEUE EUROPÄISCHE PATENTSCHRIFT

(11) **EP 3 077 436 B2**
(45) Veröffentlichungstag und Bekanntmachung des Hinweises auf die Entscheidung über den Einspruch: **15.11.2023**
(45) Hinweis auf die Patenterteilung: 06.01.2021
(21) Anmeldenummer: 14808893.3
(22) Anmeldetag: 27.11.2014
(51) Int. Cl.: C08G 18/28, C08K 5/04, C08K 5/07, C08K 5/10, C08K 5/16

(54) **POLYURETHANE MIT REDUZIERTER ALDEHYDEMISSION**
POLYURETHANES WITH REDUCED ALDEHYDE EMISSION
POLYURÉTHANES AVEC ÉMISSION RÉDUITE D'ALDÉHYDE

(30) Priorität: 02.12.2013 EP 13195350
(43) Veröffentlichungstag der Anmeldung: 12.10.2016
(73) Patentinhaber: BASF SE, 67056 Ludwigshafen am Rhein (DE)
(72) Erfinder: OTERO MARTINEZ, Iran, 32351 Stemwede (DE); PARTUSCH, Georg, 86932 Pürgen (DE); HAGEN, Christian, 49448 Lemförde (DE)
(74) Vertreter: BASF IP Association
(86) Internationale Anmeldenummer: PCT/EP2014/075870
(87) Internationale Veröffentlichungsnummer: WO 2015/082316

(56) Entgegenhaltungen:
- EP-A1- 1 428 847
- EP-A1- 1 674 515
- EP-A2- 1 002 816
- WO-A1-2013/006425
- US-A1- 2012 178 839
- US-A1- 2013 203 880

## Beschreibung

Die vorliegende Erfindung betrifft ein Verfahren zur Herstellung von Polyurethanschaumstoffen bei dem man (a) Polyiso-cyanat, (b) polymeren Verbindungen mit gegenüber Isocyanaten reaktiven Gruppen, (c) Katalysatoren, (d) einer CH-Aciden Verbindung, der allgemeinen Formel R¹-CH₂-R², wobei R¹ und R² unabhängig voneinander für einen elektronenziehenden Rest der allgemeinen Formel -C(O)-R³ oder-CN steht, wobei der Rest R³ ausgewählt ist aus der Gruppe bestehend aus -NH₂, -NH-R⁴ -NR⁵R⁶, OR⁷ oder R⁸, wobei R⁴, R⁵, R⁶ und R⁷ unabhängig ausgewählt sind aus der Gruppe bestehend aus aliphatischen, araliphatischen oder aromatischen Kohlenwasserstoffen, die substituiert sein können und R8 ausgewählt ist aus der Gruppe, bestehend aus aliphatischen Kohlenwasserstoffen mit 2 bis 10 Kohlenstoffen, die substituiert sein können, (e) Treibmittel und gegebenenfalls (f) Kettenverlängerungs- und oder Vernetzungsmittel und (g)Hilfsmittel und/oder Zusatzstoffe zu einer Reaktionsmischung vermischt und die Reaktionsmischung zum Polyurethan ausreagieren lässt, wobei die Verbindung R¹-CH₂-R² eine oder mehrere, gegenüber Isocyanat reaktive Gruppen, ausgewählt aus -OH, -NH- oder NH₂ Gruppen, wobei Carbonsäuregruppen oder Carbonsäureamidgruppen nicht als gegenüber Isocy-anat reaktive Gruppen gelten, enthält, und/oder das Molekulargewicht der CH-Aciden Verbindung (d) größer als 300 g/mol ist. Weiter betrifft die vorliegende Erfindung Polyurethanschaumstoffe, die nach einem solchen Verfahren hergestellt wurden und den Einsatz solchen Polyurethanen im Innenraum von Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispiels-weise von Rohren, Warmwasserspeichern oder Kühlschränken und als Verkleidungsteile, beispielsweise im Fahrzeug-bau. Insbesondere im Automobilbau werden Polyurethane häufig eingesetzt, beispielsweise in der Automobilaußenver-kleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden. Dabei gibt es bereits unterschiedliche Ansätze zur Verringerung der Aldehydemissionen.

So beschreibt Beispielsweise EP 1428847, dass Aldehydemissionen durch nachträgliche Zugabe von polymeren Stoffen mit primären und/oder sekundären Aminogruppen vermindert werden können. Verantwortlich für die Reduktion der Emissionen sind die Amingruppen im Polymer. Da diese gegenüber Isocyanat reaktiv sind und größtenteils durch Reaktion mit dem Isocyanat deaktiviert werden, sollte der polymere Wirkstoff auf den bereits hergestellten Schaum gegeben werden. Nachteilig ist hier ein umständliches Verfahren mit einem Zusätzlichen Schritt der Nachbehandlung des Schaumstoffs. Der Einsatz in kompakten Systemen oder geschlossenzelligen Schaumstoffen ist nicht möglich.

Aus US 2006/0141236 ist der Einsatz von Hydrazinverbindungen in Polyurethanen als Aldehydfänger beschrieben. Dabei wird die aktive Substanz direkt in die Polyolkomponente gegeben. Hydrazine und Hydrazinderivate weisen allerdings eine katalytische Aktivität auf und können die Polyurethanreaktion beeinflussen. Weiter wird nur eine geringe Reduktion der Aldehydemissionen von ca. 60 % erhalten.

In US 20130203880 wird der Einsatz von Polyhydrazodicarbonamid als Substanz zur Reduktion von Aldehydemissionen in Polyurethanschaumstoffen beschrieben. Eine deutliche Reduktion von Aldehyden wird allerdings nur bei Zugabe einer großen Menge an Polyhydrazodicarbonamid von 2 bis 5,5 Gew.-% in der Polyolkomponente erreicht. Da Polyhydrazodicarbonamid ebenfalls katalytische Eigenschaften aufweist, wird durch die Zugabe dieser Substanz in dieser Größenordnung das Reaktionsprofil geändert. US2009/0326089 beschreibt den Einsatz von Verbindungen, die eine Carbonamidgruppe und eine Nitrilgruppe besitzen, zur Verringerung von Formaldehydemissionen in Polyurethanschaumstoffen.

Aufgabe der vorliegenden Erfindung war es, Polyurethanschaumstoffe, zu liefern, die eine verringerte Emission organischer Verbindungen, insbesondere eine veringerte Aldehydemission, aufweisen. Insbesondere sollten die für die reduzierte Aldehydemission verantwortlichen Substanzen eine lang andauernde Wirksamkeit zeigen und zu keinen zusätzlichen Emissionen des Polyurethans führen. Weiter sollen die emissionarmen Polyurethanschaumstoffe durch ein einfaches Verfahren herstellbar sein, bei dem die Zugabe der für die Reduktion der Aldehydemmissionen verantwortlichen Substanzen direkt zu der Reaktionsmischung zur Herstellung des Polyurethans möglich ist. Insbesondere sollen dabei kostengünstige und einfach zu handhabende Stoffe zum Einsatz kommen, die die Herstellung der Polyurethane nicht beeinträchtigen.

Überraschenderweise konnte die erfindungsgemäße Aufgabe gelöst werden durch ein Verfahren gemäß Anspruch 1.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen Schaumstoffe auf Basis von Polyisocyanat-Polyadditionsprodukten, wie Weichschaumstoffe, Halbhart-schaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Po-lyurethanschaumstoffe die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80 %, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethanschaumstoffe erhalten indem man Polyisocyanate (a) mit polymeren Verbindungen mit gegenüber Isocyanaten reaktiven Gruppen (b), gegebenenfalls Katalysatoren (c) CH-Acide Verbindungen (d) Treibmittel (e) und gegebenenfalls Kettenverlängerer (f) und sonstigen Hilfs- und Zusatzstoffen (g) zu einer Reaktionsmischung vermischt und ausreagieren lässt.

Dabei ist das erfindungsgemäße Polyurethan ein Polyurethanschaumstoff mit einer mittleren Dichte von 20 bis 850 g/L, vorzugsweise ein Polyurethanhalbhartschaumstoff oder ein Polyurethanweichschaumstoff oder ein Polyurethanhartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei enthalten die Katalysatoren (c) einbaubare Aminkatalysatoren. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatorenwerden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind beispielsweise Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di-methyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3 aminopropyl)-bis(aminoethylether), 3-Dimethylaminoisopropyl-diisopropanolamin oder Mischungen davon.

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Werden Katalysatoren (c) eingesetzt, können diese beispielsweise in einer Konzentration von 0,001 bis 5 Gew.- %, insbesondere 0,05 bis 2 Gew.-% als Katalysator bzw. Katalysatorkombination, bezogen auf das Gewicht der Komponente (b) eingesetzt werden.

Als Komponente (d) werden eine oder mehrere CH-Aciden Verbindung der allgemeinen Formel R¹-CH₂-R² eingesetzt. Die Acidität der CH₂-Gruppe wird dabei durch zwei elektronenziehenden Reste R¹ und R² erzeugt. Dabei handelt es sich bei der Verbindung der allgemeinen Formel R¹-CH₂-R² um eine CH-Acide Verbindung, wenn die Reste R¹ und R² unabhängig voneinander für Reste der allgemeinen Formel -C(O)-R³ oder-CN stehen, wobei der Rest R³ ausgewählt ist aus der Gruppe bestehend aus -NH₂, -NH-R⁴ -NR⁵R⁶, OR⁷ oder R⁸. Die Reste R⁴, R⁵, R⁶ und R⁷ sind dabei unabhängig ausgewählt aus der Gruppe bestehend aus aliphatischen, araliphatischen oder aromatischen Kohlenwasserstoffen, die substituiert sein können und R8 ausgewählt ist aus der Gruppe, bestehend aus aliphatischen Kohlenwasser-stoffen mit 2 bis 10 Kohlenstoffen, die substituiert sein können. Dabei steht R¹ und/ oder R² vorzugsweise für-CN oder -C(O)-R³ mit R³ gleich NH-R⁴-NR⁵R⁶, OR⁷ oder R⁸, mehr bevorzugt für -CN oder -C(O)-R³ mit R³ gleich -NR⁵R⁶, OR⁷ oder R⁸ noch mehr bevorzugt für -CN, OR⁷ oder R⁸. Vorzugsweise steht dabei einer der Reste R¹ und R² für eine -CN-Gruppe. Dabei beträgt der pKa-Wert der erfindungsgemäßen Verbindung (d) bei 25 °C in Wasser vorzugsweise 0,5 bis 16, vorzugsweise 8 bis 14,0 und insbesondere 8 bis 13,5. Weiter weist die Verbindung R¹-CH₂-R² eine oder mehrere, gegenüber Isocyanat reaktive Gruppen, ausgewählt aus -OH, -NH- oder NH₂ Gruppen, auf, wobei Carbonsäuregruppen oder Carbonsäure-amidgruppen nicht als gegenüber Isocyanat reaktive Gruppen gelten, und/oder das Molekulargewicht der CH-Aciden Verbindung (d) ist größer als 300 g/mol.

Vorzugsweise sind die Reste R⁴, R⁵, R⁶und R⁷ jeweils unabhängig voneinander ausgewählt sind aus der Gruppe bestehend aus aliphatischen Kohlenwasserstoffen mit 1 bis 15, vorzugsweise 2 bis 10 Kohlenstoffatomen, die substituiert sein können. Ist das Molekulargewicht der CH-Aciden Verbindung größer als 300 g/mol sind als Substituenten dabei vorzugsweise eine oder mehrere gegenüber Isocyanat reaktive Gruppen enthalten, die vorzugsweise gegenüber Isocyanaten reaktive Wasserstoffatome enthalten. Solche gegenüber Isocyanat reaktiven Gruppen können beispielsweise -OH, -NH- oder -NH₂ Gruppen sein, vorzugsweise gelten Carbonsäuregruppen oder Carbonsäureamid-Gruppen nicht als gegenüber Isocyanat reaktiven Gruppen. Besonders bevorzugt sind gegenüber Isocyanat reaktiven Gruppen eine oder mehrere OH-Gruppen, insbesondere eine OH-Gruppe. In einer besonders bevorzugten Ausführungsform enthält eine Verbindung gemäß der allgemeinen Formel R¹-CH₂-R² genau eine gegenüber Isocyanaten reaktive Gruppe und insbesondere eine -OH Gruppe. Falls R³ für -NH₂ oder - NHR⁴ steht gilt die NH₂ bzw.- die -NHR⁴-Gruppe nicht als isocyanatreaktive Gruppe, sofern nicht der Rest R⁴ für einen Rest steht, der eine -OH, -NH- oder -NH₂-Gruppe trägt.

In einer weiteren bevorzugten Ausführungsform ist R³-NH₂, -NH-CH₃, -OCH₃, -N(CH₃)₂ oder-NH-(C₂H₄)-OH oder -CH₂-C(O)-O-CH₃, mehr bevorzugt -NH-CH₃, -OCH₃, -N(CH₃)₂ oder -NH-(C₂H₄)-OH oder -CH₂-C(O)-O-CH₃ und noch mehr bevorzugt -OCH₃, -N(CH₃)₂ oder -CH₂-C(O)-O-CH₃. 2-Ciano-N-(2-hydroxyethyl)acetamid und Methyl 2-(2-hydroxyethylcarbamoyl)ethanol.

Weist die Verbindung R¹-CH₂-R² eine oder mehrere, gegenüber Isocyanat reaktive Gruppen, ausgewählt aus -OH, -NH- oder NH₂ Gruppen, auf, wobei Carbonsäuregruppen oder Carbonsäureamidgruppen nicht als gegenüber Isocyanat reaktive Gruppen gelten, ist das Molekulargewicht der CH-Aciden Verbindung (d) vorzugsweise größer als 250 g/mol, besonders bevorzugt größer als 300 g/mol und insbesondere größer als 350 g/mol. Dies gilt insbesondere, wenn die CH-Acide Verbindung (d) keine gegen über Isocyanat reaktiven Gruppen aufweist. Diese Verbindungen weisen vorzugsweise mehr als eine CH-acide Gruppe auf, besonders bevorzugt weisen diese Verbindungen 2 bis 5 und insbesondere 3 oder 4 CH-acide Gruppen auf. Beispiele für solche Verbindungen sind Beispiele hierfür sind das Reaktionsprodukt von Malonsäure und einem Diol, wie Diethylenglykol, insbesondere im Molekularverhältnis 2 : 3.

Die Komponente (d)wird im Rahmen der vorliegenden Erfindung vorzugsweise in Mengen von 0,01 bis 5 Gew.- %, besonders bevorzugt 0,05 bis 2 Gew.-% und insbesondere 0.1 bis 1 Gew.-%, bezogen auf das Gesamtgewicht der Komponenten (a) bis (f) eingesetzt.

Zur Herstellung des Polyurethan-Schaumstoffs enthalten erfindungs-gemäße Reaktionsmischungen noch Treibmittel (e). Dabei können alle zur Herstellung von Polyurethanen bekannten Treibmittel eingesetzt werden. Diesekönnen chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physika-lischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüs-siges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800g/L und insbesondere 25 bis 500g/L aufweist. Besonders bevorzugt werden Treibmittel, enthaltend Wasser eingesetzt.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte , kann sich allerdings der Zusatzvon Kettenverlängerungsmitteln ,Vernetzungsmitteln oder gegebenenfalls auch Gemischen davon als vorteilhaft erweisen.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise nied-ermolekulare Verbindungen mit gegenüber Isocyanaten reaktiven funktionellen Gruppen, beispielsweise Glycerin, Tri-methylolpropan, Glycol und Diamine. Weitere mögliche niedermolekulare Kettenverlängerungsmittel und/oder Vernet-zungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydro-lyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans die Polyisocyanate (a), die Polyole (b), der CH-Aciden Verbindung (d), und, falls eingesetzt die Treibmittel (e) und Kettenverlängerungsmittel und/oder Vernetzungsmittel (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gege-benenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig, wenn als erfindungsgemäßes Polyurethan ein thermoplastisches Polyurethan, ein Weichschaumstoff, ein Halbhartschaumstoff, ein Hartschaumstoff oderein Integralschaumstoff hergestellt werden soll. So werden beispielsweise für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch die CH-Acide Verbindung (d) zugegeben.

Neben dem erfindungsgemäßen Verfahren ist auch ein Polyurethanschaumstoff, erhältlich nach einem erfindungsgemäßen Verfahren Gegenstand der Erfindung. Die erfindungsgemäßen Polyurethane werden vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster sowie im Automobilinnenraum, beispielsweise als Lenkräder, Armaturenbretter, Türverkleidungen, Teppichhinterschäumungen, akustische Schaum-stoffe, wie Dachhimmel, sowie Kopfstützen oder Schaltknäufe. Dabei werden insbesondere CH-Acide Verbindung be-vorzugt, die gegenüber Isocyanaten eine oder mehrere reaktive Gruppen aufweisen. Diese ermöglichen es, dass die CH-Acide Verbindung (d) an das Polyurethangerüst angebunden wird was zum einen zu einer längeren Wirksamkeit, speziell unter anspruchsvollen Bedingungen, wie hohen Temperaturen oder Einstrahlung von Sonnenlicht, zu längerer Aldehydreduktion führen als ohne die gegenüber Isocyanat reaktiven Gruppen. Dazu kommt, dass CH-Acide Verbin-dungen (d) mit einbaubaren Gruppen zu Polyurethanen führt, die neben einer geringen Emission von Aldehyden allge-mein geringere Emissionen flüchtiger organischer Verbindungen zeigen.

Die Erfindung soll im Folgenden anhand von Beispielen verdeutlicht werden.

**Ausgangsmaterialien:**

| | |
|---|---|
| Polyol A: | Polyetherol mit einer OH-Zahl 28 mg KOH/g und einer Funktionalität von 2.7 auf Basis von Ethylenoxyd und Propylenoxid, einem Propylenoxidgehalt von 84 Gew.-% und einem Ethylenoxidgehalt von 14 Gew.-% |
| Polyol B: | Polyetherol mit einer OH-Zahl 250 mg KOH/g und einer Funktionalität von 2.0 auf Basis von Polyol A (35%), Propylenoxid (45%) und Dimethylaminopropylamin (20%) |
| TEOA: | Triethanolamin |
| Isopur SU-12021: | Schwarzpaste der Firma ISL-Chemie |
| Jeffcat ZF10: | Katalysator der Firma Huntsman |
| Jeffcat DPA: | Katalysator der Firma Huntsman |

### Additive (Additive A1 bis A5 und A9 stellen Vergleichsversuche dar)

- A1:: Dimethyl 1,3-Acetondicarboxylat
- A2:: N-Methylacetoacetamid
- A3:: N,N-Dimethylacetoacetamid
- A4:: 2-Cyanoacetoacetamid
- A5:: Methylcyanoacetat
- A6:: 2-Cyano-N-(2-hydroxyethyl)acetamid
- A7:: Methyl 2-(2-hydroxyethylcarbamoyl)ethanoat
- A8:: Reaktionsprodukt von Malonsäure und Diethylenglykol (2:3 - Mw 458)
- A9:: Trimethylolpropan-triacetoacetat (Mw 386)

A6 und A7 wurden als 10 Gew.-%-ige wässrige Lösung der Mischung A zugesetzt.

| | |
|---|---|
| Isocyanat A: | Mischung von 85 Teile Carbodiimid-modifiziertes 4,4'-MDI und 15 Teile polymeres Diphenylmethandiisocyanat PMDI mit einem NCO-Gehalt von 27,1 |

Die Mischung A wurde durch Vermischen von folgenden Komponenten hergestellt:

| | |
|---|---|
| 92.0 | Gew.-Teile Polyol A |
| 3.0 | Gew.-Teile Polyol B |
| 1.5 | Gew.-Teile TEOA |
| 0.5 | Gew.-Teile Isopur SA-21050 |
| 1.9 | Gew.-Teile Wasser |
| 0.4 | Gew.-Teile Jeffcat DPA |
| 0.2 | Gew.-Teile Jeffcat ZF10 |
| 0.5 | Gew.-Teile Verbindungen A1 bis A7 gemäß Tabelle 1 |

Die Mischung A und die Isocyanat-Komponente A sowie die Additive gemäß Tabelle 1 wurden bei einem Isocyanatindex von 100 miteinander vermischt und in eine geschlossene Form gegeben, so dass Formteile mit einer mittleren Dichte von 160 g/L erhalten wurden.

Zur Bestimmung von Formaldehyde wurde analog ASTM D-5116-06 vorgegangen. Die Kammergröße betrug 4,7 Litern. Als Polyurethanproben wurden Stücke mit einer Größe von 110 mm x 100 mm x 25 mm eingesetzt. Wurden Formschaumstoffe geprüft wurden Teile aus dem Innern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd im Eluat wurde mittels HPLC bestimmt. Nach diesem Aufbau liegt die Nachweisgrenze für Formaldehydemissionen bei ≤ 11 µg/m³.

### Tabelle 1: In der Kammer bestimmte Formaldehydwerte von Halbhart-Schäume ohne Zugabe von Additiven (Referenz) sowie bei Zugabe der jeweiligen Additiven A1 bis A9 in den angegebenen Konzentrationen, jeweils angegeben in Gewichtsteilen, bezogen auf das Gesamtgewicht der Mischung A.

**Tabelle 1**

| | Konz. in A | Formaldehyd (µg/m³) |
|---|---|---|
| Referenz | - | 792 |
| A1 | 0,50% | 142 |
| A2 | 0,50% | 109 |
| A3 | 0,50% | 323 |
| A4 | 0,50% | 133 |
| A5 | 0,50% | 130 |
| A6 | 0,50% | 273 |
| A7 | 0,50% | 282 |
| A8 | 0,50% | 342 |
| A9 | 0,50% | 80 |

### Tabelle 2: VOC Werte (ppm) nach der VDA 278 der erhaltenen Halbhart-schäume bei Zugabe der jeweiligen Additiven A4, A5, A6, A7 und A9.

**Tabelle 2**

| | VOC Total (ppm) | Bemerkung |
|---|---|---|
| A4 (0,25TI) | 76 | davon 32 ppm von A4 |
| A5 (0,25TI) | 133 | davon 100 ppm von A5 |
| A6 (0,25TI) | 40 | kein A6 oder Derivate von A6 nachweisbar |
| A7 (0,25TI) | 54 | kein A7 oder Derivate von A7 nachweisbar |
| A9 (0,25TI) | 37 | kein A9 oder Derivate von A9 nachweisbar |

## Patentansprüche

1. Verfahren zur Herstellung von Polyurethanschaumstoffen bei dem man
(a) Polyisocyanat,
(b) polymeren Verbindungen mit gegenüber Isocyanaten reaktiven Gruppen,
(c) Katalysatoren, enthaltend einbaubare Aminkatalysatoren,
(d) einer CH-aciden Verbindung, der allgemeinen Formel
R¹-CH₂-R² ,
wobei R¹ und R² unabhängig voneinander für einen elektronenziehenden Rest der allgemeinen Formel -C(O)-R³ oder -CN steht, wobei der Rest R³ ausgewählt ist aus der Gruppe bestehend aus -NH₂, -NH-R⁴ -NR⁵R⁶, OR⁷ oder R⁸, wobei R⁴, R⁵, R⁶ und R⁷ unabhängig ausgewählt sind aus der Gruppe bestehend aus aliphatischen, araliphatischen oder aromatischen Kohlenwasserstoffen, die substituiert sein können und R⁸ ausgewählt ist aus der Gruppe, bestehend aus aliphatischen Kohlenwasserstoffen mit 2 bis 10 Kohlenstoffen, die substituiert sein können,
(e) Treibmittel und gegebenenfalls
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt, wobei die Verbindung R¹-CH₂-R² eine oder mehrere, gegenüber Isocyanat reaktive Gruppen, ausgewählt aus -OH, -NH- oder NH₂ Gruppen, wobei Carbonsäuregruppen oder Carbonsäureamidgruppen nicht als gegenüber Isocyanat reaktive Gruppen gelten, enthält, und/oder das Molekulargewicht der CH-aciden Verbindung (d) größer als 300 g/mol ist.

2. Verfahren nach Anspruch 1, **dadurch gekennzeichnet, dass** die Reste R⁴, R⁵ R⁶ und R⁷ jeweils unabhängig voneinander ausgewählt sind aus der Gruppe bestehend aus aliphatischen Kohlenwasserstoffen mit 1 bis 15 Kohlenstoffatomen, die substituiert sein können.

3. Verfahren nach Anspruch 1 oder 2, **dadurch gekennzeichnet, dass** die gegenüber Isocyanat reaktiven Gruppen -OH, -NH- oder -NH₂ Gruppen enthalten.

4. Verfahren nach Anspruch 1, **dadurch gekennzeichnet, dass** das Molekulargewicht der CH-aciden Verbindung (d) größer als 250 g/mol ist und die CH-acide Verbindung (d) mehr als eine CH-Acide Gruppe aufweist.

5. Verfahren nach einem der Ansprüche 1 bis 3, **dadurch gekennzeichnet, dass** die Komponente (d), bezogen auf das Gesamtgewicht der Komponenten (a) bis (f) zu 0.01 bis 5 Gew.-% enthalten ist.

6. Verfahren nach einem der Ansprüche 1 bis 4, **dadurch gekennzeichnet, dass** die polymeren Verbindungen mit gegenüber Isocyanaten reaktiven Gruppen (b) Polyetherole enthalten.

7. Verfahren nach einem der Ansprüche 1 bis 3, **dadurch gekennzeichnet, dass** als einbaubare Katalysatoren Verbindungen eingesetzt werden, die neben der bzw. den gegenüber Isocyanaten reaktiven Gruppen eine oder mehrere tertiäre, aliphatische Aminogruppen aufweisen.

8. Polyurethanschaumstoffe nach Anspruch 6, **dadurch gekennzeichnet, dass** mindestens eine tertiäre Aminogruppe zwei Reste, unabhängig voneinander ausgewählt aus Methyl- und Ethylrest, sowie einen weiteren organischen Rest trägt.

9. Verfahren nach einem der Ansprüche 1 bis 7, **dadurch gekennzeichnet, dass** das Polyurethan ein Polyurethanschaumstoff mit einer mittleren Dichte von 20 bis 850 g/L ist.

10. Polyurethanschaumstoff, herstellbar nach einem Verfahren gemäß einem der Ansprüche 1 bis 9.

11. Verwendung von Polyurethanschaumstoffen nach Anspruch 10 im Innenraum von Verkehrsmitteln.

## Claims

1. A process for the production of polyurethane foams where
(a) polyisocyanate,
(b) polymeric compounds having groups reactive toward isocyanates,
(c) catalysts, comprising incorporable amine catalysts,
(d) a CH-acidic compound of general formula
R¹-CH₂-R² ,
wherein R¹ and R² independently of one another represent an electron-withdrawing radical of general formula -C(O)-R³ or -CN, wherein the radical R³ is selected from the group consisting of -NH₂, -NH-R⁴-NR⁵R⁶, OR⁷ or R⁸, wherein R⁴, R⁵, R⁶ and R⁷ are independently selected from the group consisting of aliphatic, araliphatic or aromatic hydrocarbons which may be substituted and R⁸ is selected from the group consisting of aliphatic hydrocarbons having 2 to 10 carbon atoms which may be substituted,
(e) blowing agents and optionally
(f) chain extenders and/or crosslinking agents and
(g) auxiliaries and/or additional substances
are mixed to give a reaction mixture and the reaction mixture is reacted to completion to give the polyurethane, wherein the compound R¹-CH₂-R² comprises one or more groups reactive toward isocyanate selected from -OH, -NH- or NH₂ groups, wherein carboxylic acid groups or carboxamide groups are not deemed as groups reactive toward isocyanate and/or the molecular weight of the CH-acidic compound (d) is greater than 300 g/mol.

2. The process according to claim 1, wherein the radicals R⁴, R⁵, R⁶ and R⁷ are each independently of one another selected from the group consisting of aliphatic hydrocarbons having 1 to 15 carbon atoms which may be substituted.

3. The process according to claim 1 or 2, wherein the groups reactive toward isocyanate comprise -OH, -NH- or -NH₂ groups.

4. The process according to claim 1, **characterized in that** the molecular weight of the CH-acidic group compound (d) is greater than 250 g/mol and the CH-acidic compound (d) comprises more than one CH-acidic group.

5. The process according to any of claims 1 to 3, wherein the quantity of component (d) comprised, based on the total weight of components (a) to (f), is from 0.01 to 5% by weight.

6. The process according to any of claims 1 to 4, wherein the polymeric compounds (b) having groups reactive toward isocyanates comprise polyetherols.

7. The process according to any of claims 1 to 3, wherein incorporable catalysts used comprise compounds having, alongside the group(s) reactive toward isocyanates, one or more tertiary aliphatic amino groups.

8. A polyurethane foam according to claim 6, wherein at least one tertiary amino group bears two radicals independently of one another selected from methyl and ethyl and a further organic radical.

9. The process according to any of claims 1 to 7, wherein the polyurethane is a polyurethane foam having an average density of 20 to 850 g/L.

10. A polyurethane foam producible by a process according to any of claims 1 to 9.

11. The use of polyurethane foams according to claim 10 in the interior of means of transport.

## Revendications

1. Procédé pour la production de mousses de polyuréthane, dans lequel on mélange
(a) un polyisocyanate,
(b) des composés polymères comportant des groupes réactifs vis-à-vis d'isocyanates,
(c) des catalyseurs, comportant des catalyseurs de type amine incorporables,
(d) un composé à CH acide, de formule générale R¹-CH₂-R² ,
dans laquelle R¹ et R² représentent indépendamment l'un de l'autre un radical attirant les électrons de formule générale -C(O)-R³ ou -CN, le radical R³ étant choisi dans le groupe constitué par -NH₂, -NH-R⁴, -NR⁵R⁶, OR⁷ ou R⁸, où R⁴, R⁵, R⁶ et R⁷ sont choisis indépendamment dans le groupe constitué par des hydrocarbures aliphatiques, araliphatiques ou aromatiques, qui peuvent être substitués, et R⁸ est choisi dans le groupe constitué par des hydrocarbures aliphatiques ayant de 2 à 10 atomes de carbone, qui peuvent être substitués,
(e) des agents porogènes et éventuellement
(f) des agents de réticulation et/ou d'extension de chaîne et
(g) des adjuvants et/ou additifs,
pour obtenir en un mélange réactionnel et on fait réagir complètement le mélange réactionnel pour aboutir au polyuréthane, le composé R¹-CH₂-R² contenant un ou plusieurs groupes réactifs vis-à-vis d'isocyanate, choisis parmi les groupes -OH, -NH- ou NH₂, les groupes acide carboxylique ou les groupes carboxamido n'étant pas considérés comme des groupes réactifs vis-à-vis d'isocyanate, et/ou la masse moléculaire du composé à CH acide (d) étant supérieure à 300 g/mole.

2. Procédé selon la revendication 1, **caractérisé en ce que** les radicaux R⁴, R⁵, R⁶ et R⁷ sont choisis chacun indépendamment les uns des autres dans le groupe constitué par des hydrocarbures aliphatiques ayant de 1 à 15 atomes de carbone, qui peuvent être substitués.

3. Procédé selon la revendication 1 ou 2, **caractérisé en ce que** les groupes réactifs vis-à-vis d'isocyanate comportent les groupes -OH, -NH- ou -NH₂.

4. Procédé selon la revendication 1, **caractérisé en ce que** la masse moléculaire du composé à CH acide (d) est supérieure à 250 g/mole et le composé à CH acide (d) comporte plus d'un groupe à CH acide.

5. Procédé selon l'une des revendications 1 à 3, **caractérisé en ce que** le composant (d) est contenu à raison de 0,01 à 5 % en poids par rapport au poids total des composants (a) à (f).

6. Procédé selon l'une des revendications 1 à 4, **caractérisé en ce que** les composés polymères comportant des groupes (b) réactifs vis-à-vis d'isocyanates comportent des polyétherols.

7. Procédé selon l'une des revendications 1 à 3, **caractérisé en ce qu'**en tant que catalyseurs incorporables sont utilisés des composés qui, outre le ou les groupes réactifs vis-à-vis d'isocyanates, comportent un ou plusieurs groupes amino aliphatiques, tertiaires.

8. Mousses de polyuréthane selon la revendication 6, **caractérisées en ce qu'**au moins un groupe amino tertiaire porte deux radicaux, choisis indépendamment l'un de l'autre parmi un radical méthyle et un radical éthyle, ainsi qu'un autre radical organique.

9. Procédé selon l'une des revendications 1 à 7, **caractérisé en ce que** le polyuréthane est une mousse de polyuréthane ayant une densité moyenne de 20 à 850 g/l.

10. Mousse de polyuréthane, pouvant être produite conformément à un procédé selon l'une des revendications 1 à 9.

11. Utilisation de mousses de polyuréthane selon la revendication 10 dans l'intérieur de moyens de transport.
